# EUROPEAN PATENT APPLICATION

(11) **EP 4 439 475 A1**
(43) Date of publication of application: **02.10.2024**
(21) Application number: 22896968.9
(22) Date of filing: 11.02.2022
(51) Int. Cl.: G06T 17/00

(54) **AREA RECONSTRUCTION METHOD AND SYSTEM**

(30) Priority: 29.11.2021 CN 202111428587
(71) Applicant: Nanjing Gallop-Sky Electronic Technology Co., Ltd., Nanjing, Jiangsu 211106 (CN)
(72) Inventor: DENG, Haifeng, Nanjing, Jiangsu 211106 (CN); JI, Jie, Nanjing, Jiangsu 211106 (CN); LI, Zhongchao, Nanjing, Jiangsu 211106 (CN); REN, Gaoyue, Nanjing, Jiangsu 211106 (CN); CAI, Sheng, Nanjing, Jiangsu 211106 (CN); GENG, Haoxuan, Nanjing, Jiangsu 211106 (CN); ZHAO, Feifei, Nanjing, Jiangsu 211106 (CN)
(74) Representative: Angerhausen, Christoph
(86) International application number: PCT/CN2022/076070
(87) International publication number: WO 2023/092865

(57) **Abstract**

Provided in the present application are an area reconstruction method and system. The method comprises: collecting an image sequence of a target area, wherein the target area comprises one or more objects to be tested; acquiring prior pose data of each image in the image sequence; reconstructing the target area according to the image sequence and the prior pose data, so as to obtain a pose of the image sequence after reconstruction and a point cloud model of the target area; and according to the reconstruction information, determining spatial data of said object in the target area.

## Description

### CROSS-REFERENCE TO RELATED APPLICATION

The present invention claims the priority to the Chinese patent application with the filing No. 202111428587.2, filed on November 29, 2021 with the China National Intellectual Property Administration, and entitled "AREA RECONSTRUCTION METHOD AND SYSTEM", the contents of which are incorporated herein by reference in entirety.

### TECHNICAL FIELD

The present invention relates to the field of surveying and mapping technologies, and specifically to an area reconstruction method and an area reconstruction system.

### BACKGROUND ART

In the surveying and mapping field, a GNSS (Global Navigation Satellite System) receiver is a major tool for point measurement and point lofting.

However, what is resolved by the GNSS receiver is position coordinates of an antenna phase center, while to-be-measured points and to-be-lofted points in actual surveying and mapping are mostly planimetric points located on the ground; therefore, the GNSS receiver needs to cooperate with a measuring rod, in the surveying and mapping, to transfer the resolved position coordinates of the antenna phase center to the planimetric points on the ground. A tip of the measuring rod needs to be placed on the to-be-measured points, so as to complete the measurement and lofting of point coordinates. In an environment with blocking of buildings and shade, an electromagnetic wave signal of the GNSS is blocked, so that resolving accuracy and reliability of the GNSS are reduced and even unavailable, and then a total station has to be used to complete the measurement and lofting of a blocked point. Thus, the conventional measurement method is labor intensive and has low operation efficiency.

### SUMMARY

The present invention aims at providing an area reconstruction method and system, which can solve the problem that the measurement in a blocked environment is unreliable in the surveying and mapping field, and improve the operation efficiency.

In the first aspect, embodiments of the present invention provide an area reconstruction method, including:
collecting an image sequence of a target area, wherein the target area includes one or more to-be-measured objects;
acquiring prior pose data of respective images in the image sequence; and
performing, according to the image sequence and the prior pose data, reconstruction on the target area, to obtain a pose of the image sequence after the reconstruction and a point cloud model of the target area.

In an optional embodiment, the prior pose data include: spatial position parameters and attitude parameters corresponding to the respective images in the image sequence; and the step of acquiring prior pose data of respective images in the image sequence includes:
determining, by a positioning system, the spatial position parameters and the attitude parameters of the respective images in the image sequence.

In the above implementation, when determining the prior pose data, the spatial position parameters and attitude parameters corresponding to the respective images in the image sequence can be determined, and the prior pose of the image sequence can be initially obtained from multiple dimensions, so as to provide data support for subsequent reconstruction of the target area, improve the construction efficiency of the point cloud model of the target area, and also enable the constructed point cloud model to be more accurate.

In an optional embodiment, the step of determining, by a positioning system, the spatial position parameters and the attitude parameters of the respective images in the image sequence includes:
determining, by a combined navigation system composed of a global navigation satellite system and an inertial navigation system, the prior pose data of the respective images in the image sequence; or
determining, by a global navigation satellite system, the spatial position parameters corresponding to the respective images in the image sequence, and determining, by an attitude and heading reference system, the attitude parameters corresponding to the respective images in the image sequence; or
determining, by a combined device composed of a global navigation satellite system and a visual odometry, the prior pose data corresponding to the respective images in the image sequence.

In the above embodiment, the prior pose data of the target area can be determined using different structures, so as to make it more flexible to obtain the prior pose data.

In an optional embodiment, the step of performing, according to the image sequence and the prior pose data, reconstruction on the target area, to obtain a pose of the image sequence after the reconstruction and a point cloud model of the target area, includes:
performing, based on the image sequence and the prior pose data, sparse reconstruction on the target area, to determine a first spatial relationship between respective feature points in the image sequence and a pose of the image sequence after the sparse reconstruction; and
performing dense reconstruction according to the first spatial relationship and the pose of the image sequence after the sparse reconstruction, to determine a second spatial relationship between the respective feature points in the image sequence, so as to obtain a pose of the image sequence after the dense reconstruction and the point cloud model of the target area.

In the above embodiment, through two-stage construction of sparse reconstruction and dense reconstruction, the point cloud model constructed can be finer.

In an optional embodiment, the step of performing, based on the image sequence and the prior pose data, sparse reconstruction on the target area, to determine a first spatial relationship between respective feature points in the image sequence and a pose of the image sequence after the sparse reconstruction, includes:
performing, using a structure from motion technique, the sparse reconstruction on the target area based on the prior pose data and the image sequence, to determine the first spatial relationship between the respective feature points in the image sequence and the pose of the image sequence after the sparse reconstruction; or
performing, using an aerotriangulation technique, the sparse reconstruction on the target area based on the prior pose data and the image sequence, to determine the first spatial relationship between the respective feature points in the image sequence and the pose of the image sequence after the sparse reconstruction.

In an optional embodiment, the step of performing dense reconstruction according to the first spatial relationship and the pose of the image sequence after the sparse reconstruction, to determine a second spatial relationship between the respective feature points in the image sequence, so as to obtain the point cloud model of the target area, includes:
performing, on the basis of the first spatial relationship between the respective feature points, dense matching and/or triangularization technique on the respective feature points in the image sequence, to perform the dense reconstruction on the target area, so as to obtain the pose of the image sequence after the dense reconstruction and the point cloud model of the target area.

In an optional embodiment, the method further includes:
determining, according to the point cloud model, spatial data of the to-be-measured object in the target area.

In an optional embodiment, the step of determining, according to the point cloud model, spatial data of the to-be-measured object in the target area includes:
determining, from the point cloud model, coordinates of a plurality of key points of the to-be-measured object in the target area; and
determining spatial data of the to-be-measured object according to the coordinates of the plurality of key points.

In the above embodiment, spatial data of the respective objects in the target area can be determined, and a relative positional relationship or dimensional data of the object can be measured without contacting the object.

In an optional embodiment, the method further includes:
generating, according to the point cloud model, a digital surface model and/or a digital elevation model of the target area.

In the second aspect, embodiments of the present disclosure provide an area reconstruction apparatus, including:
a collection module, configured to collect an image sequence of a target area, wherein the target area includes one or more to-be-measured objects;
an acquisition module, configured to acquire prior pose data of respective images in the image sequence; and
a reconstruction module, configured to perform reconstruction on the target area according to the image sequence and the prior pose data, to obtain a pose of the image sequence after the reconstruction and a point cloud model of the target area.

In the third aspect, embodiments of the present disclosure provide an area reconstruction system, including:
a collection unit, configured to collect an image sequence of the target area;
a satellite navigation positioning unit and an inertial measurement unit, configured to collect pose data of the image sequence; and
a processing unit, configured to process the pose data and the image sequence, so as to obtain a point cloud model of the target area.

In an optional embodiment, the area reconstruction system further includes:
a display unit, configured to display data determined by the processing unit.

In an optional embodiment, the area reconstruction system further includes: a first shell, wherein
the satellite navigation positioning unit, the inertial measurement unit, the collection unit, the processing unit and the display unit are mounted in the first shell.

In an optional embodiment, the area reconstruction system further includes: a second shell and a third shell, wherein
the satellite navigation positioning unit, the inertial measurement unit, the collection unit and the processing unit are mounted in the second shell;
the display unit is mounted in the third shell; and
the processing unit and the display unit are in communication connection.

In an optional embodiment, the area reconstruction system further includes: a fourth shell and a fifth shell, wherein
the satellite navigation positioning unit, the inertial measurement unit and the collection unit are mounted in the fourth shell;
the processing unit and the display unit are mounted in the fifth shell; and
the processing unit is in communication connection with the satellite navigation positioning unit, the inertial measurement unit and the collection unit, respectively.

In the fourth aspect, embodiments of the present disclosure provide an area reconstruction system, including: a terminal device and a server, wherein
the terminal device includes: a satellite navigation positioning unit, an inertial measurement unit and a collection unit, wherein
the collection unit is configured to collect an image sequence of the target area; and
the satellite navigation positioning unit and the inertial measurement unit are configured to collect pose data of the image sequence; and
the server is configured to receive the pose data and the image sequence sent by the terminal device, and process the pose data and the image sequence, so as to obtain a point cloud model of the target area.

The beneficial effects of the embodiments of the present disclosure are as follows: by determining the prior pose data first, and then performing reconstruction on the target area on the basis of the images and the prior pose data, the measurement on the to-be-measured object can be realized without contact, and the prior pose can simplify operations required for the target area reconstruction, and also can make the point cloud model of the target area obtained by the reconstruction more accurate.

### BRIEF DESCRIPTION OF DRAWINGS

In order to more clearly illustrate technical solutions of embodiments of the present invention, drawings which need to be used in the embodiments will be briefly introduced below. It should be understood that the drawings below merely show some embodiments of the present invention, and thus should not be considered as limitation to the scope. Those ordinarily skilled in the art still could obtain other relevant drawings according to these drawings, without using any inventive efforts.
FIG. 1 is a block diagram of an area reconstruction system provided in embodiments of the present invention;
FIG. 2 is a structural schematic diagram of an area reconstruction system provided in embodiments of the present invention;
FIG. 3 is a flow chart of an area reconstruction method provided in embodiments of the present invention;
FIG. 4 is a schematic diagram of a determination means for a feature point used in the area reconstruction method provided in embodiments of the present invention; and
FIG. 5 is a schematic diagram of functional modules of an area reconstruction apparatus provided in embodiments of the present invention.

### DETAILED DESCRIPTION OF EMBODIMENTS

The technical solutions in the embodiments of the present invention are described below with reference to the drawings in the embodiments of the present invention.

It should be noted that like reference signs and letters represent like items in the following drawings, and thus, once a certain item is defined in one drawing, it is not needed to be defined or explained in subsequent drawings. Meanwhile, in the description of the present invention, terms such as "first" and "second" are merely used for distinguishing the description, but should not be construed as indicating or implying importance in the relativity.

The inventors know that in the surveying and mapping field, the GNSS receiver is usually used for performing surveying and mapping based on the satellite navigation positioning technology. The GNSS receiver surveying and mapping technique is active measurement, and needs to receive an electromagnetic wave signal broadcast by a satellite terminal. If the electromagnetic wave signal broadcast by the satellite is blocked, the positioning quality will be reduced or even positioning is failed. When the electromagnetic wave signal broadcast by the satellite cannot be received, a common solution is to use a total station as a supplementary measurement means, which requires user to additionally carry a set of total station and a tripod. Moreover, operations of the total station are relatively cumbersome, and often require cooperation of multiple persons. Furthermore, the GNSS receiver, in cooperation with the measuring rod, can only measure one point at a time, and thus such surveying and mapping method is inefficient. The above problems are main factors that restrict application of the GNSS receiver in the surveying and mapping field.

Based on the above research, embodiments of the present invention provide an area reconstruction method and an area reconstruction system, which realize positioning and reconstruction of a target area by means of images in a non-contact manner. The present invention is described below with some embodiments.

### Embodiment 1

In order to facilitate understanding of the present embodiment, first an execution device for an area reconstruction method disclosed in the embodiments of the present invention is introduced in detail.

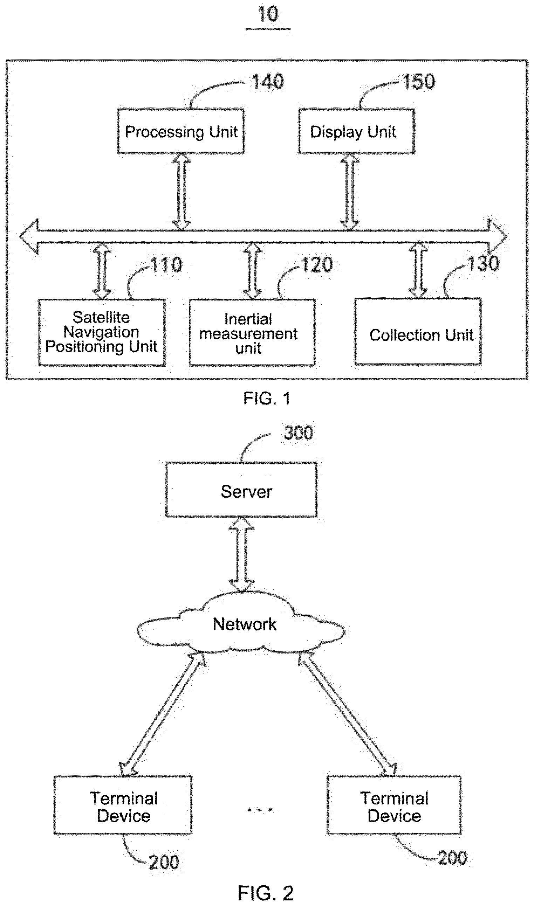

As shown in FIG. 1, it is a structural schematic diagram of an area reconstruction system provided in embodiments of the present invention.

The area reconstruction system 10 in the present embodiment may include: a satellite navigation positioning unit 110, an inertial measurement unit 120, a collection unit 130 and a processing unit 140.

The satellite navigation positioning unit in the present embodiment may be a global navigation satellite system (GNSS). Position data of a to-be-measured object can be determined by the satellite navigation positioning unit.

Exemplarily, the satellite navigation positioning unit may be a chip integrated with a satellite navigation positioning function, and the chip may further include a power supply module, a communication module, an antenna, a memory, a processor and other units. The power supply module is configured to provide a required power supply for various modules in the chip. The communication module is configured to realize communication with other units of the area reconstruction system. The processor is configured to execute instructions required for performing positioning by the satellite navigation positioning unit.

The inertial measurement unit is a means configured to measure a three-axis attitude angle and an acceleration of the to-be-measured object. The inertial measurement unit may include a triaxial accelerometer and a triaxial gyroscope. The accelerometer is used for measuring an acceleration signal of the to-be-measured object, and the gyroscope can be used for measuring an angular velocity signal of the to-be-measured object. By the measured angular velocity and acceleration of the to-be-measured object in a three-dimensional space, an attitude of the to-be-measured object can be calculated.

Optionally, the inertial measurement unit may be a chip integrated with an inertial measurement function. The chip may further include a power supply module, a communication module, an antenna, a memory, a processor and other units. The power supply module is configured to provide a required power supply for various components on the chip. The communication module and the antenna are configured to realize communication with other units of the area reconstruction system. The processor is configured to execute an instruction required when measuring attitude data of the to-be-measured object by the inertial measurement function.

The collection unit is configured to collect image data of the to-be-measured object. Exemplarily, the collection unit may be a camera. Optionally, the collection unit may also include a plurality of cameras.

The above processing unit may be an integrated circuit chip, with a signal processing function. The above processing unit may be a general-purpose processor, including a central processing unit (CPU for short), a network processor (NP for short), etc., and may also be a digital signal processor (DSP for short), an application-specific integrated circuit (ASIC for short), a field programmable gate array (FPGA for short) or other programmable logic devices, discrete gates, transistor logic devices or discrete hardware components that can realize or execute various methods, steps, and logic blocks disclosed in the embodiments of the present invention. The general-purpose processor may be a microprocessor or the processor may also be any conventional processor or the like.

Exemplarily, when the target area needs to be measured, this area reconstruction system may be used to determine, at a set distance from the target area, an image sequence of the target area at different angles and position data and attitude data thereof.

In the present embodiment, the area reconstruction system may further include a display unit 150. The display unit is configured to display a collected image of the target area, and may also be configured to display a model of the target area constructed based on the image sequence.

Exemplarily, the above display unit provides an interactive interface (for example, a user operation interface) between the area reconstruction system and the user, or is configured to display image data for user's reference. In the present embodiment, the display unit may be a liquid crystal display or a touch display. If the display unit is a touch display, it may be a capacitive touch screen, a resistive touch screen or the like that supports single-touch and multi-touch operations. Supporting single-touch and multi-touch operations means that the touch display can sense a touch operation simultaneously generated at one or more positions on the touch display.

The satellite navigation positioning unit, the inertial measurement unit, the collection unit and the processing unit of the area reconstruction system in the present embodiment may have different arrangement modes based on different requirements. The arrangement modes of the satellite navigation positioning unit, the inertial measurement unit, the collection unit, the processing unit and other units of the area reconstruction system are described below through several optional embodiments.

In a first optional embodiment, the above satellite navigation positioning unit, inertial measurement unit, collection unit and processing unit are integrated in one device.

This area reconstruction system may further include a first shell. The satellite navigation positioning unit, the inertial measurement unit, the collection unit, the processing unit and the display unit may be mounted in the first shell.

Exemplarily, various elements, i.e., the satellite navigation positioning unit, the inertial measurement unit, the collection unit, the processing unit and the display unit are electrically connected with each other directly or indirectly, so as to realize transmission or interaction of data. For example, these elements may realize electrical connection therebetween via one or more communication buses or signal lines.

In a second optional embodiment, the above satellite navigation positioning unit, inertial measurement unit, collection unit and processing unit are arranged in two devices.

Exemplarily, this area reconstruction system may include a second shell and a third shell.

In the above, the satellite navigation positioning unit, the inertial measurement unit, the collection unit and the processing unit are mounted in the second shell. The second shell and various units mounted therein may form one device. The display unit is mounted in the third shell. The third shell and the display unit mounted therein may form one device.

Various elements, i.e., the satellite navigation positioning unit, the inertial measurement unit, the collection unit and the processing unit mounted in the third shell are electrically connected with each other directly or indirectly, so as to realize transmission or interaction of data. For example, these elements may realize electrical connection therebetween via one or more communication buses or signal lines.

In the above, the two devices may be in communication connection with each other. For example, the processing unit and the display unit are in communication connection. Optionally, the processing unit and the display unit may be in communication connection wirelessly, for example, a wireless connection may be realized in a near-field communication manner such as Bluetooth and WiFi. Optionally, this processing unit and this display unit may also be in communication connection in a wired manner.

Exemplarily, this area reconstruction system may include a fourth shell and a fifth shell.

In the above, the satellite navigation positioning unit, the inertial measurement unit and the collection unit are mounted in the fourth shell; and the processing unit and the display unit are mounted in the fifth shell.

Various elements, i.e., the satellite navigation positioning unit, the inertial measurement unit and the collection unit in the fourth shell are electrically connected with each other directly or indirectly, so as to realize transmission or interaction of data. For example, these elements may be electrically connected with each other via one or more communication buses or signal lines.

The processing unit and the display unit in the fifth shell are electrically connected with each other directly or indirectly, so as to realize transmission or interaction of data. For example, these elements may be electrically connected with each other via one or more communication buses or signal lines.

In the above, two devices may be in communication connection with each other. For example, the processing unit inside the fifth shell may be respectively in communication connection with the satellite navigation positioning unit, the inertial measurement unit and the collection unit in the fifth shell.

In an optional embodiment, the above display unit may also be a display unit of a mobile terminal, and this mobile terminal may be in communication connection with a measurement device that includes the satellite navigation positioning unit, the inertial measurement unit, the collection unit and the processing unit.

The mobile terminal may be a personal computer (PC), a tablet computer, a smart mobile phone, a personal digital assistant (PDA), a measurement handbook or other mobile intelligent terminals.

In a third optional embodiment, as shown in FIG. 2, the area reconstruction system may include a terminal device 200 and a server 300.

The terminal device 200 may include the satellite navigation positioning unit, the inertial measurement unit and the collection unit.

Optionally, the terminal device 200 may further include the display unit.

The server 300 may include the processing unit.

Optionally, the terminal device 200 may further include the display unit.

The server 300 may include the processing unit.

In the present embodiment, the terminal device 200 may be in communication connection with the server 300, for example, they may communicate through a mobile data network such as 4G and 5G.

In a fourth optional embodiment, as shown in FIG. 2, the area reconstruction system may further include a terminal device, a display terminal and a server.

In the above, the satellite navigation positioning unit, the inertial measurement unit and the collection unit of the area reconstruction system may be integrated in the terminal device, the display unit of the area reconstruction system is integrated in the display terminal, and the processing unit of the area reconstruction system may be integrated in the server.

Definitely, based on different requirements, the satellite navigation positioning unit, the inertial measurement unit, the collection unit, the processing unit and the display unit of the area reconstruction system may also be arranged in different implementations than the several implementations in the above.

For example, various units, i.e., the satellite navigation positioning unit, the inertial measurement unit, the collection unit, the processing unit and the display unit of the area reconstruction system each may be arranged in an independent device. Optionally, each independent device may include the power supply module, the communications module, the memory, the processor and other units, so that the each independent device may independently realize a required function.

For another example, the satellite navigation positioning unit and the inertial measurement unit of the area reconstruction system are arranged in one device, and the collection unit, the processing unit and the display unit may be all arranged in another device.

In the present embodiment, data of the satellite navigation positioning unit, the inertial measurement unit, and the collection unit of the area reconstruction system may be transmitted to the processing unit, and data of the processing unit may be transmitted to the display unit.

The area reconstruction system 10 in the present embodiment may be configured to execute various steps in various area reconstruction methods provided in the embodiments of the present invention. Implementation processes of the area reconstruction methods are described in detail through several embodiments below.

### Embodiment 2

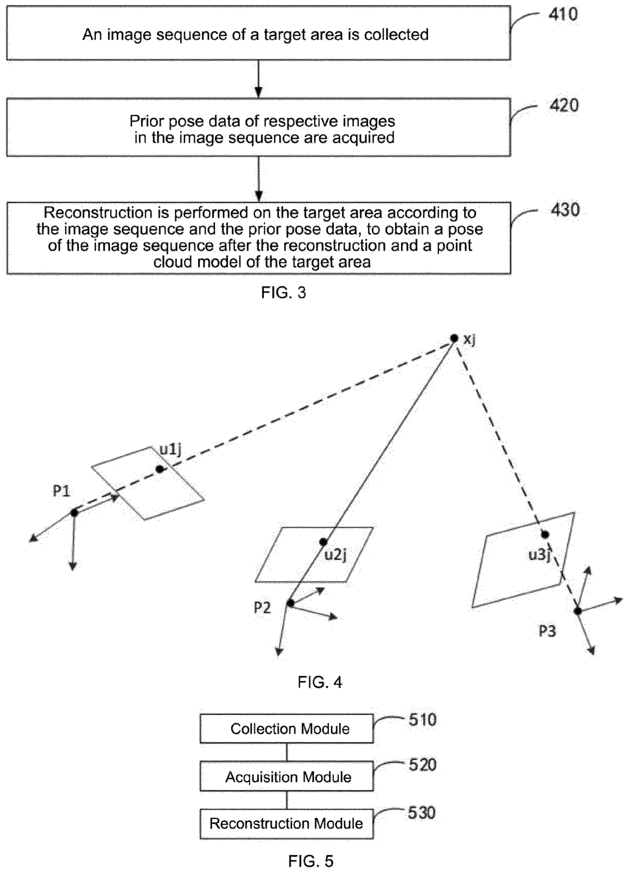

Referring to FIG. 3, it is a flow chart of an area reconstruction method provided in embodiments of the present invention. The method in the present embodiment may be applied to an area reconstruction system. A specific process shown in FIG. 3 will be described in detail below.

At Step 410, an image sequence of a target area is collected.

The above target area includes one or more to-be-measured objects. In different scenarios, the to-be-measured object may be different. For example, if the target area is an urban residential area, the to-be-measured object may be various houses in the urban residential area. For another example, if the target area is a mine area, the to-be-measured object may be various facilities in the mine area. For another example, if the target area is a construction site, the to-be-measured object may be earthwork, boundaries and the like in the construction site.

At Step 420, prior pose data of respective images in the image sequence are acquired.

The prior pose data may include spatial position parameters and/or attitude parameters corresponding to the respective images in the image sequence.

The area reconstruction system in the present embodiment may include a positioning system, and the spatial position parameters corresponding to the respective images in the image sequence can be determined by the positioning system.

The area reconstruction system in the present embodiment may include an inertial measurement unit, and the spatial attitude parameters corresponding to the respective images in the image sequence can be determined by the inertial measurement unit.

Optionally, the area reconstruction system may include a positioning system. The positioning system may have a positioning function and an inertial measurement function, and then the spatial position parameters and attitude parameters corresponding to the respective images in the image sequence can be determined by the positioning system.

In the present embodiment, Step 410 and Step 420 are not necessarily executed in sequence. For example, when collecting the image sequence of the target area, based on a real-time state of a collection device, coordinates of the collection device and attitudes of the collection device when collecting the images can be determined, the coordinates of the collection device are taken as the spatial position parameters corresponding to the images, and the attitudes of the collection device are taken as the attitude parameters corresponding to the images.

Optionally, Step 410 may also be executed before Step 420. For example, each time after an image is collected, in a state that the attitude of the collection device is not changed, current coordinates and the attitude of the collection device are collected.

Optionally, Step 410 may also be performed after Step 420. For example, each time before an image is collected, the coordinates and attitude of the collection device are determined first, and after the coordinates and the attitude of the collection device are determined, the collection device collects an image of the target area.

At Step 430, reconstruction is performed on the target area according to the image sequence and the prior pose data, to obtain a pose of the image sequence after the reconstruction and a point cloud model of the target area.

In the present embodiment, three-dimensional coordinates of respective feature points in the images may be determined through the image sequence. Then, the point cloud model of the target area is constructed according to the prior pose data and the three-dimensional coordinates of the respective feature points, and the pose of the image sequence after the reconstruction is obtained.

In an embodiment, for any target feature point, the collection device may collect images of this target feature point at least in two different positions. Then, three-dimensional coordinates of the respective feature points may be determined by a binocular visual positioning method.

As shown in FIG. 4, three images are shown in the drawing, where P1, P2, and P3 respectively represent the spatial position parameters and attitude parameters of the three images. Herein, the spatial position parameters and attitude parameters of the three images may be determined by the positioning system when collecting the three images.

In the above, xj in the drawing represents the target feature point; and ulj, u2j, and u3j represent pixel coordinates of the feature point in the three images.

In the example shown in FIG. 4, the three-dimensional coordinates of the target feature point xj may be calculated based on P1, P2, P3, ulj, u2j, and u3j.

In an embodiment, the above images in the image sequence may be depth images, and the three-dimensional coordinates of the respective feature points are determined according to a position of the collection device and the depth images of the respective feature points when collecting the the respective feature points.

In an optional embodiment, reconstruction may be further performed on the to-be-measured object according to the image sequence and the prior pose data by SLAM (simultaneous localization and mapping) algorithm, to obtain the point cloud model of the target area.

In the present embodiment, interactive data may also be acquired first, and based on the interactive data, the image sequence and the prior pose data, reconstruction is performed on the to-be-measured object to obtain the point cloud model of the target area.

Exemplarily, the interactive data may be obtained through interaction with the user.

Exemplarily, the interactive data may include parameters preset by the user, for example, a predicted size of the to-be-measured object.

The interactive data may further include operations for the images in the image sequence. For example, the operations for the images may include image zooming in, image zooming out, image rotation, image translation, selecting a point in images, marking images, entry of attributes of objects in images and other image operations.

Exemplarily, the interactive data may further include selecting an image containing the to-be-measured object from the images in the image sequence.

In the above implementation, when performing construction on the point cloud model of the target area, based on a positioning function of the area reconstruction system, the respective feature points in the target area and the prior pose data of respective to-be-measured objects may be determined, and then the three-dimensional coordinates of the respective feature points may be determined in conjunction with the image sequence, so as to determine the point cloud model of the target area. Compared with measurement of the to-be-measured object directly by the GNSS receiver, as the reconstruction can be performed on the target area through the image sequence, the situation that the signal is blocked when the GNSS receiver performs the measurement can be compensated for, so that the determined point cloud model has a better effect. Further, since there is support of the prior pose data before determining the point cloud model based on the image sequence, the determined point cloud model can also be more accurate.

Based on area reconstruction systems of different structures, different determination methods for the prior pose data may be employed. The determination of the prior pose data is described below through several embodiments.

In an embodiment, the prior pose data of the respective images in the image sequence may be determined by a combined navigation system formed by a global navigation satellite system and an inertial navigation system.

In the present embodiment, the combined navigation system formed by the global navigation satellite system and the inertial navigation system may also be understood as a GNSS/INS combined navigation system.

In another embodiment, the spatial position parameters corresponding to the respective images in the image sequence may be determined by the global navigation satellite system, and attitude parameters corresponding to the respective images in the image sequence may be determined by an attitude and heading reference system.

In the above, the attitude and heading reference system may be an AHRS system composed of an accelerometer, a gyroscope and a magnetometer.

In another embodiment, the prior pose data corresponding to the respective images in the image sequence may be determined by a combined device formed by a global navigation satellite system and a visual odometry.

The visual odometry may be a VIO (visual-inertial odometry). The visual-inertial odometry may include a visual sensor and an inertial measurement unit.

The visual odometry may be denoted as VIO.

In order to make the constructed point cloud model more accurate, the point cloud model of the target area may also be determined through a two-stage construction process: sparse reconstruction (sparse construction) and dense reconstruction (dense construction). Exemplarily, Step 430 may include: Step 431 and Step 432.

At Step 431, based on the image sequence and the prior pose data, the sparse reconstruction is performed on the target area, to determine a first spatial relationship between the respective feature points in the image sequence and a pose of the image sequence after the sparse reconstruction.

Exemplarily, the first spatial relationship may include three-dimensional coordinates of the respective feature points and common-view relationship between the respective feature points.

In the above, the common-view relationship may denote a positional relationship between two visual positioning feature points in images collected in the same environment.

In an embodiment, the sparse reconstruction may be performed on the target area using a structure from motion technique based on the prior pose data and the image sequence, to determine the first spatial relationship between the respective feature points in the image sequence.

The structure from motion technique is denoted as SFM technique. The SFM technique can recover three-dimensional information on the respective to-be-measured objects in the target area from the above image sequence.

In another embodiment, the sparse reconstruction may be performed on the target area using an aerotriangulation technique based on the prior pose data and the image sequence, to determine the first spatial relationship between the respective feature points in the image sequence and a pose of the image sequence after the sparse reconstruction.

At Step 432, the dense reconstruction is performed according to the first spatial relationship, to determine a second spatial relationship between the respective feature points in the image sequence, so as to obtain the pose of the image sequence after the dense reconstruction and the point cloud model of the target area.

Optionally, on the basis of the first spatial relationship between the respective feature points, dense matching may be performed on the respective feature points in the image sequence, to perform the dense construction on the target area, so as to obtain the point cloud model of the target area.

Optionally, on the basis of the first spatial relationship between the respective feature points, the dense matching may be performed on the respective feature points in the image sequence using a triangularization technique, to realize the dense construction on the target area, so as to obtain the point cloud model of the target area.

In some optional embodiments, the point cloud model of the target area may also be obtained only based on the sparse construction in Step 431.

In the present embodiment, the area reconstruction method may further include Step 440, at which a digital surface model and/or a digital elevation model of the target area is generated according to the point cloud model.

On the basis that the point cloud model is constructed, sizes of the respective to-be-measured objects in the target area may also be determined, and a relative distance, a relative positional relationship and the like between any two to-be-measured objects in the target area may also be determined through the point cloud model.

The area reconstruction method may further include Step 450, at which spatial data of the to-be-measured object in the target area is determined according to the point cloud model.

Optionally, Step 450 may include Step 451 and Step 452.

At Step 451, coordinates of a plurality of key points of the to-be-measured object in the target area are determined from the point cloud model.

The key points may be points capable of representing the to-be-measured object. For example, when the to-be-measured object is various facilities in a mine area, the key points of the facilities may be the highest points of the facilities, points on bases of the facilities and so on. For another example, when the to-be-measured object is a house, the key points of the house may be various vertices of an external structure of the house, points on an edge of foundation of the house and so on. In the above, when the to-be-measured objects are different, the corresponding key points may also be different.

Exemplarily, the to-be-measured object may be determined according to received information input by the user, and then the coordinates of the key points of the to-be-measured object are screened out from the point cloud model.

For example, if the target area is a mine area, the received information input by the user is a target facility existing in the mine area, and then according to the target facility, the to-be-measured object may be determined to be the target facility in the target area, and points capable of representing specificity of the target facility may be screened out from the point cloud model of the target area as the key points.

Optionally, the to-be-measured object selected by the user from the point cloud model as well as data to be measured with respect to the to-be-measured object may be acquired via a human-machine interactive interface. For example, the key points of the to-be-measured object selected by the user from the point cloud model or the image sequence, a distance between two points in the to-be-measured object, and a surface corresponding to the to-be-measured object are acquired.

At Step 452, spatial data of the to-be-measured object are determined according to the coordinates of the plurality of key points.

Exemplarily, the spatial data may include a volume of the to-be-measured object, a height of the to-be-measured object, an area of one side of the to-be-measured object, distances between a plurality of to-be-measured objects and the like.

Based on a non-contact measurement system proposed in the present invention, the surveying and mapping of a blocked environment can be realized, and by photographing a plurality of images, the measurement can be achived just by selecting corresponding to-be-measured planimetric points in the images, thereby solving the problem of blocking in the measurement of the GNSS receiver. Moreover, all to-be-measured objects in a photographed target area may be measured in one time of data collection, which can greatly improve operation efficiency. Besides, information such as volume and area of structures may be measured based on the point cloud model, thereby expanding usage scenarios of the system.

### Embodiment 3

Based on the same concept of application, embodiments of the present invention further provide an area reconstruction apparatus corresponding to the area reconstruction method. As the principle of the apparatus in the embodiments of the present invention for solving the problem is similar to that of the foregoing area reconstruction method, for the implementation of the apparatus in the present embodiment, reference can be made to the description in the embodiments of the above method, and repetition will not be made herein.

Referring to FIG. 5, it is a schematic diagram of functional modules of the area reconstruction apparatus provided in embodiments of the present invention. Various modules in the area reconstruction apparatus in the present embodiment are configured to execute various steps in the above method embodiments. The area reconstruction apparatus includes: a collection module 510, an acquisition module 520 and a reconstruction module 530, wherein contents of various modules are as follows.

The collection module 510 is configured to collect an image sequence of a target area, wherein the target area includes one or more to-be-measured objects.

The acquisition module 520 is configured to acquire prior pose data of the respective images in the image sequence.

The reconstruction module 530 is configured to perform reconstruction on the target area according to the image sequence and the prior pose data, to obtain a pose of the image sequence after the reconstruction and a point cloud model of the target area.

Besides, embodiments of the present invention further provide a computer-readable storage medium, the computer-readable storage medium stores a computer program, and when the computer program is executed by a processor, the steps of the area reconstruction method in the above method embodiments are implemented.

A computer program product of the area reconstruction method provided in the embodiments of the present invention includes a computer-readable storage medium storing a program code, and instructions included in the program code can be used to execute the steps of the area reconstruction method in the above method embodiments. Reference can be made to the above method embodiments for details, which will not be repeated herein.

In the several embodiments provided in the present invention, it should be understood that the device and the method disclosed also may be implemented in other manners. The apparatus embodiments described above are merely illustrative. For example, the flow charts and the block diagrams in the drawings show system structures, functions and operations that can be implemented in the apparatus, method and computer program products according to multiple embodiments of the present invention. In this regard, each block in the flow charts or the block diagrams may represent a part of a module, a program segment or a code, which contains one or more executable instructions configured to realize a specified logical function. It also should be noted that in some implementation modes as substitutions, the functions marked in the blocks can also take effect in an order different than that marked in the drawings. For example, two continuous blocks can be executed in parallel or in a reverse order, which depends on the function involved. It also should be noted that each block or combination of the blocks in the block diagram and/or the flow chart can be realized by a dedicated hardware-based system used to execute a specified function or action, or can be realized by a combination of dedicated hardware and computer instructions.

Besides, various functional modules in various embodiments of the present invention can be integrated together to form one independent part, and it is also possible that the various modules exist independently, or that two or more modules are integrated to form one independent part.

If the function is realized in a form of software functional module and is sold or used as an individual product, it may be stored in one computer-readable storage medium. Based on such understanding, the technical solutions in essence or parts making contribution to the prior art or parts of the technical solutions of the present invention can be embodied in form of a software product, and this computer software product is stored in a storage medium, including several instructions for making a computer device (which may be a personal computer, a server or a network device, etc.) execute all or part of the steps of the methods of the embodiments of the present invention. The preceding storage medium includes various media in which program codes can be stored, such as a USB flash disk, a mobile hard disk, a read-only memory (ROM), a random access memory (RAM), a diskette and a compact disk. It should be indicated that in the present text, relational terms such as first and second are merely used for distinguishing one entity or operation from another entity or operation, while it is not required or implied that these entities or operations necessarily have any such practical relation or order. Moreover, the terms such as "comprise", "contain" or any other variants thereof are intended to encompass non-exclusive inclusion, such that a process, a method, an article or a device including a series of elements includes not only those elements, but also includes other elements that are not explicitly listed, or further includes elements inherent in such process, method, article, or device. Without more restrictions, an element defined with the wording "including a..." does not exclude existence of other same elements in the process, method, article or device including this element.

The above-mentioned are merely for preferred embodiments of the present invention and not used to limit the present invention. For those skilled in the art, various modifications and changes could be made to the present invention. Any modifications, equivalent substitutions, improvements and so on made within the spirit and principle of the present invention should be covered within the scope of protection of the present invention. It should be noted that like reference signs and letters represent like items in the following drawings, and thus, once a certain item is defined in one drawing, it is not needed to be defined or explained in subsequent drawings.

The above-mentioned are merely for specific embodiments of the present invention, but the scope of protection of the present invention is not limited thereto. Any changes or substitutions that could be easily conceived by those skilled in the present art within the technical scope disclosed in the present invention should be covered within the scope of protection of the present invention. Therefore, the scope of protection of the present invention should be determined by the scope of protection of the claims.

## Claims

1. An area reconstruction method, **characterized in that** the method comprises steps of:
collecting an image sequence of a target area, wherein the target area comprises one or more to-be-measured objects;
acquiring prior pose data of respective images in the image sequence; and
performing, according to the image sequence and the prior pose data, reconstruction on the target area, to obtain a pose of the image sequence after the reconstruction and a point cloud model of the target area.

2. The method according to claim 1, **characterized in that** the prior pose data comprise: spatial position parameters and attitude parameters corresponding to the respective images in the image sequence; and the step of acquiring prior pose data of respective images in the image sequence comprises:
determining, by a positioning system, the spatial position parameters and the attitude parameters of the respective images in the image sequence.

3. The method according to claim 2, **characterized in that** the step of determining, by a positioning system, the spatial position parameters and the attitude parameters of the respective images in the image sequence, comprises:
determining, by a combined navigation system composed of a global navigation satellite system and an inertial navigation system, the prior pose data of the respective images in the image sequence; or
determining, by a global navigation satellite system, the spatial position parameters corresponding to the respective images in the image sequence, and determining, by an attitude and heading reference system, the attitude parameters corresponding to the respective images in the image sequence; or
determining, by a combined device composed of a global navigation satellite system and a visual odometry, the prior pose data corresponding to the respective images in the image sequence.

4. The method according to claim 1, **characterized in that** the step of performing, according to the image sequence and the prior pose data, reconstruction on the target area, to obtain a pose of the image sequence after the reconstruction and a point cloud model of the target area, comprises:
performing, based on the image sequence and the prior pose data, sparse reconstruction on the target area, to determine a first spatial relationship between respective feature points in the image sequence and a pose of the image sequence after the sparse reconstruction; and
performing dense reconstruction according to the first spatial relationship and the pose of the image sequence after the sparse reconstruction, to determine a second spatial relationship between the respective feature points in the image sequence, so as to obtain a pose of the image sequence after the dense reconstruction and the point cloud model of the target area.

5. The method according to claim 4, **characterized in that** the step of performing, based on the image sequence and the prior pose data, sparse reconstruction on the target area, to determine a first spatial relationship between respective feature points in the image sequence and a pose of the image sequence after the sparse reconstruction, comprises:
performing, using a structure from motion technique, the sparse reconstruction on the target area based on the prior pose data and the image sequence, to determine the first spatial relationship between the respective feature points in the image sequence and the pose of the image sequence after the sparse reconstruction; or
performing, using an aerotriangulation technique, the sparse reconstruction on the target area based on the prior pose data and the image sequence, to determine the first spatial relationship between the respective feature points in the image sequence and the pose of the image sequence after the sparse reconstruction.

6. The method according to claim 4, **characterized in that** the steps of performing dense reconstruction according to the first spatial relationship, to determine a second spatial relationship between the respective feature points in the image sequence, so as to obtain the point cloud model of the target area, comprises:
performing, on the basis of the first spatial relationship between the respective feature points, dense matching and/or triangularization technique on the respective feature points in the image sequence, to perform the dense reconstruction on the target area, so as to obtain the pose of the image sequence after the dense reconstruction and the point cloud model of the target area.

7. The method according to claim 1, **characterized in that** the method further comprises:
determining, according to the point cloud model, spatial data of the to-be-measured object in the target area.

8. The method according to claim 7, **characterized in that** the step of determining, according to the point cloud model, spatial data of the to-be-measured object in the target area, comprises:
determining, from the point cloud model, coordinates of a plurality of key points of the to-be-measured object in the target area; and
determining spatial data of the to-be-measured object according to the coordinates of the plurality of key points.

9. The method according to any one of claim 1-8, **characterized in that** the method further comprises:
generating, according to the point cloud model, a digital surface model and/or a digital elevation model of the target area.

10. An area reconstruction apparatus, **characterized in that** the apparatus comprises:
a collection module, configured to collect an image sequence of a target area, wherein the target area comprises one or more to-be-measured objects;
an acquisition module, configured to acquire prior pose data of respective images in the image sequence; and
a reconstruction module, configured to perform reconstruction on the target area according to the image sequence and the prior pose data, to obtain a pose of the image sequence after the reconstruction and a point cloud model of the target area.

11. An area reconstruction system, **characterized in that** the system comprises:
a collection unit, configured to collect an image sequence of the target area;
a satellite navigation positioning unit and an inertial measurement unit, configured to collect pose data of the image sequence; and
a processing unit, configured to process the pose data and the image sequence, so as to obtain a point cloud model of the target area.

12. The area reconstruction system according to claim 11, **characterized in that** the system further comprises:
a display unit, configured to display data determined by the processing unit.

13. The area reconstruction system according to claim 12, **characterized in that** the system further comprises: a first shell, wherein
the satellite navigation positioning unit, the inertial measurement unit, the collection unit, the processing unit and the display unit are mounted in the first shell.

14. The area reconstruction system according to claim 12, **characterized in that** the system further comprises: a second shell and a third shell, wherein
the satellite navigation positioning unit, the inertial measurement unit, the collection unit and the processing unit are mounted in the second shell;
the display unit is mounted in the third shell; and
the processing unit and the display unit are in communication connection.

15. The area reconstruction system according to claim 12, **characterized in that** the system further comprises a fourth shell and a fifth shell, wherein
the satellite navigation positioning unit, the inertial measurement unit and the collection unit are mounted in the fourth shell;
the processing unit and the display unit are mounted in the fifth shell; and
the processing unit is in communication connection with the satellite navigation positioning unit, the inertial measurement unit and the collection unit, respectively.

16. An area reconstruction system, **characterized in that** the system comprises: a terminal device and a server, wherein
the terminal device comprises: a satellite navigation positioning unit, an inertial measurement unit and a collection unit, wherein
the satellite navigation positioning unit and the inertial measurement unit are configured to collect pose data of a target area;
the collection unit is configured to collect an image sequence of the target area; and
the server is configured to receive the pose data and the image sequence sent by the terminal device, and process the pose data and the image sequence, so as to obtain a point cloud model of the target area.
